# EUROPÄISCHE PATENTSCHRIFT

(11) **EP 1 897 733 B1**
(45) Veröffentlichungstag und Bekanntmachung des Hinweises auf die Patenterteilung: **14.10.2009**
(21) Anmeldenummer: 07015433.1
(22) Anmeldetag: 07.08.2007
(51) Int. Cl.: B60J 7/14

(54) **Öffnungsfähiges Dach für ein Cabriolet**
Openable roof for a convertible
Toit ouvrant pour un cabriolet

(30) Priorität: 08.09.2006 DE 102006042293
(43) Veröffentlichungstag der Anmeldung: 12.03.2008
(60) Teilanmeldung: 09001366.5
(73) Patentinhaber: Dr. Ing. h.c. F. Porsche Aktiengesellschaft, 70435 Stuttgart (DE)
(72) Erfinder: Beierl, Dominik, 70825 Korntal-Münchingen (DE); Biersack, Harald, Dr., 70839 Gerlingen (DE)

(56) Entgegenhaltungen:
- EP-A- 1 810 858
- DE-A1- 3 416 286
- DE-A1- 10 147 016

## Beschreibung

Die vorliegende Erfindung betrifft ein Verdeck für ein Cabriolet gemäß Oberbegriff des Anspruchs 1.

Ein solches Verdeck ist aus der DE 101 47 016 A1 bekannt. Es besitzt einen hinteren Heckscheibenrahmen, dem im geschlossenen Zustand des Verdecks zumindest ein davor gelegener Dachabschnitt zugeordnet ist. Dachabschnitt und/oder Heckscheibenträger sind als Modulträger ausgebildet, an dem unterschiedliche Dachmodule anbringbar sind. So kann beispielsweise der Dachabschnitt mit einem Verdeckstoff bezogen sein, während der Heckscheibenträger als starres hinteres Dachteil mit Heckscheibe ausgebildet ist.

Cabriolets weisen üblicherweise öffnungsfähige Dächer, im allgemeinen so genannte Hardtops oder Softtop-Verdecke auf. Insbesondere die als Softtops ausgebildeten Verdecke fallen dabei jedoch durch eine hohe Lärmkulisse innerhalb eines Innenraums des Cabriolets unangenehm auf.

Aus der DE 102 05 935 B4 ist eine Fahrzeugdachstruktur bekannt, die an einem Cabriolet bewegbar gelagert und zwischen einer Schließstellung über dem Fahrgastraum und einer Offenstellung im Dachablageraum des Fahrzeugs verstellbar ist. Die Fahrzeugdachstruktur weist dabei einen Vorder-, einen Mittel- und einen Hinterabschnitt auf, wobei der Vorder- und der Hinterabschnitt als feste Dachteile ausgebildet sind und die Fahrzeugdachstruktur durch Ergänzung eines festschaligen mittleren Dachteils als Mittelabschnitt ein Hardtopdach oder durch Ergänzung eines zumindest den Mittelabschnitt überdeckenden flexiblen Dachteils ein Faltverdeck bildet. Um die unterschiedlichen Dachvarianten realisieren zu können, sind das mittlere, feste Dachteil bzw. das flexible Dachteil für den Mittelabschnitt als Austauschteile an der Fahrzeugdachstruktur lösbar befestigt.

Die vorliegende Erfindung beschäftigt sich mit dem Problem, für ein Verdeck der gattungsgemäßen Art eine weitere Ausführungsform anzugeben, bei welcher insbesondere der Fahrkomfort des Cabriolets erhöht ist.

Erfindungsgemäß wird dieses Problem durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, ein Verdeck eines Cabriolets in einer Modulbauweise auszubilden, wobei ein stets gleiches Verdeckgestänge und stets gleiche Modulträgerabschnitte zum Einsatz gelangen, welche mit, je nach gewünschter Dachvariante, unterschiedlichen flächigen Dachmodulen belegbar sind. Das Verdeck ist dabei in einem rückwärtigen Bereich des Cabriolets in üblicher Weise ablegbar und weist einen rückwärtigen Heckscheibenrahmen sowie im geschlossenem Zustand zumindest einen in Fahrtrichtung davor gelegenen Dachabschnitt auf. Die Dachabschnitte bzw. der Heckscheibenrahmen sind dabei jeweils als rahmenartiger Modulträger ausgebildet und können zur Realisierung unterschiedlicher Dachvarianten mit unterschiedlichen, flächigen Dachmodulen bestückt werden. Durch die Modulbauweise lassen sich mit einer hohen Anzahl an Gleichteilen, nämlich dem Verdeckgestänge, dem Heckscheibenrahmen und den Dachabschnitten, unterschiedlichste Dachvarianten realisieren, indem hierzu unterschiedliche Dachmodule an den oben genannten Dachkomponenten angeordnet werden. So kann beispielsweise ein zumindest teilweise transparentes Panoramadach lediglich durch den Einbau transparenter Dachmodule realisiert werden, wodurch ein kostengünstiges Baukastensystem erreicht wird, welches jedoch einen hohen Flexibilitätsgrad bei der Fertigung erlaubt. Bei der erfindungsgemäßen Lösung überzieht zur Realisierung einer Panoramadachvariante der Überzug bei geschlossenem Verdeck ausschließlich das Verdeckgestänge, während an den Dachabschnitten und im Heckscheibenrahmen transparente Dachmodule angebracht sind. Hierdurch lässt sich auch bei geschlossenem Verdeck das für Cabriolets bekannte und hochgeschätzte offene Fahrgefühl realisieren, wobei jedoch äußere Witterungseinflüsse abgeschirmt werden können. Durch den Einsatz von getönten oder beispielsweise selbsttönenden Dachmodulen, kann zudem eine direkte Sonnenstrahlenbelastung reduziert werden, wodurch der Fahrkomfort des erfindungsgemäßen Cabriolets gesteigert werden kann. Bei einer weiteren Ausführungsform des Verdecks ist zweckmäßig ein flexibler Überzug vorgesehen, der bei geschlossenem Verdeck sämtliche Dachabschnitte und den Heckscheibenrahmen in einem die Heckscheibe umgebenden Bereich, überzieht. Hierdurch kann eine, einem Softtop ähnliche Dachvariante geschaffen werden, wobei der vorzugsweise wasserabweisende Überzug äußere Witterungseinflüsse abschirmt. Hierdurch lassen sich die Vorteile eines sogenannten Hardtops, nämlich eine deutlich verbesserte Geräuschkulisse im Innenraum des Cabriolets, mit dem erfindungsgemäßen Verdeck erreichen, welches von seiner Konstruktion dem eines verstärkten Softtops entspricht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

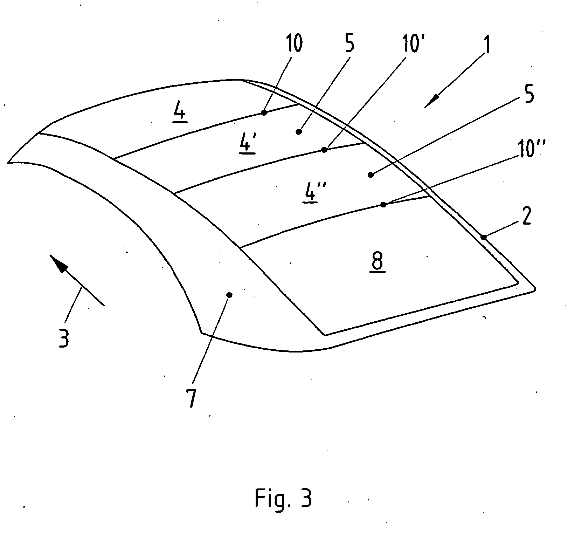

Ein von der Erfindung umfasstes Ausführungsbeispiel ist in Fig. 3 dargestellt und wird in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Ansicht auf rahmenartige Modulträger eines Verdecks eines Cabriolets,
- Fig. 2: eine Darstellung wie in Fig. 1, jedoch mit angebrachten Dachmodulen und einem angebrachten Überzug,
- Fig. 3: eine Darstellung wie in Fig. 2, jedoch mit anderen Dachmodulen.

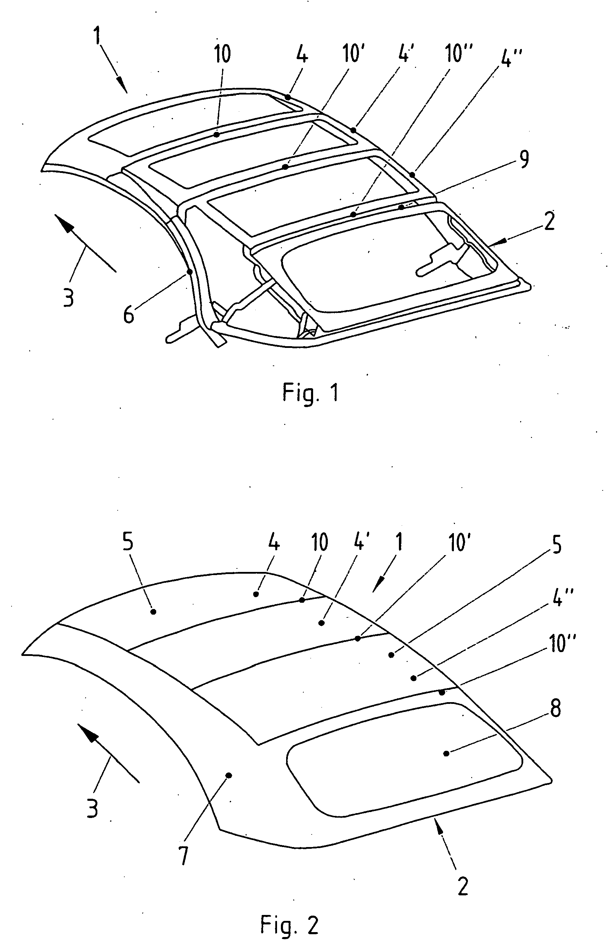

Entsprechend Fig. 1 ist ein zu öffnendes Verdeck 1 eines im übrigen nicht gezeigten Cabriolets dargestellt, welches in einem rückwärtigen Bereich des Cabriolets, insbesondere einen Verdeckkasten, ablegbar ist. Das Verdeck 1 weist einen rückwärtigen Heckscheibenrahmen 2 und in geschlossenem Zustand zumindest einen in Fahrtrichtung 3 davor gelegenen Dachabschnitt 4, 4', 4" auf. In geöffnetem Zustand, liegen der Dachabschnitt 4 und 4' oberhalb des Heckscheibenrahmens 2, während der Dachabschnitt 4" bei abgelegtem Verdeck 1 unterhalb des Heckscheibenrahmens 2 angeordnet ist.

Gemäß der Fig. 1 weist das Verdeck 1 insgesamt oben beschriebene drei Dachabschnitte 4, 4', 4" und den Heckscheibenrahmen 2 auf, wobei der in Fahrtrichtung 3 vorderste Dachabschnitt 4 als Integraldachrahmen und der direkt dahinter gelegene Dachabschnitt 4' als erster Flächenspriegel ausgebildet sind. Der zwischen dem ersten Flächenspriegel 4' und dem Heckscheibenrahmen 2 angeordnete Dachabschnitt 4" ist als zweiter Flächenspriegel ausgebildet.
Zur Realisierung unterschiedlicher Dachvarianten ist nunmehr vorgesehen, dass zumindest ein Dachabschnitt 4, 4', 4" und/oder der Heckscheibenrahmen 2 jeweils als rahmenartiger Modulträger ausgebildet sind/ist, an dem unterschiedliche, flächige Dachmodule 5 anbringbar sind (vgl. Fig. 2).

Die Dachmodule 5 können dabei beispielsweise ganz oder zumindest teilweise transparent ausgebildet sein, wobei auch eine Ausbildung aus klarem oder getöntem Sicherheitsverbundglas denkbar ist. Mit derartigen Dachmodulen 5 lässt sich beispielsweise ein Panaromadach erzeugen. Darüber hinaus ist vorstellbar, dass zumindest ein Dachmodul 5 aus Leichtmetall oder aus Kunststoff, d.h. nicht transparent, ausgebildet ist und zusätzlich beispielsweise in der Wagenfarbe des nicht gezeigten Cabriolets gehalten ist. Dabei können die unterschiedlichen Dachmodule 5 in beliebiger Weise in die zugehörigen Dachabschnitte 4, 4', 4" bzw. in den zugehörigen Heckscheibenrahmen 2 eingesetzt bzw. daran angebracht werden.

Generell sind die als Modulträger ausgebildete Dachabschnitte 4, 4', 4" und der Heckscheibenrahmen 2 zumindest bei geschlossenem Verdeck 1 zwischen einem seitlichen Verdeckgestänge 6 angeordnet, welches einen seitlichen Dachrahmen bildet. Zumindest dieses Verdeckgestänge 6 ist dabei bei allen Varianten von einem flexiblen, von üblichen Softpops her bekannten, Überzug 7 überzogen, der durch seine wasserabweisende Wirkung äußere Witterungseinflüsse von einem Innenraum des Cabriolets abschirmt. Generell kann dabei vorgesehen sein, dass der flexible Überzug 7 entweder bei geschlossenem Verdeck 1 sämtliche Dachabschnitte 4, 4', 4" sowie den Heckscheiberirahmen 2 in einem eine Heckscheibe 8 umgebenden Bereich überzieht oder aber dass zur Realisierung der Panoramadachvariante der Überzug 7 bei geschlossenem Verdeck 1 ausschließlich das Verdeckgestänge 6 überzieht, während an den Dachabschnitten 4, 4', 4" und am Heckscheibenrahmen 2 transparente Dachmodule 5 angebracht sind.

Fig. 2 zeigt eine Dachvariante, bei welchem der flexible Überzug 7 das seitliche Verdeckgestänge 6 überzieht, ebenso wie den Heckscheibenrahmen 2 in dem die Heckscheibe 8 umgebenden Bereich. In den Dachabschnitten 4, 4', 4" sind zwischen dem seitlichen Überzug 7 die einzelnen Dachmodule 5 angeordnet, welche beispielsweise aus Leichtmetall und/oder aus Kunststoff ausgebildet sein können und insbesondere die selbe Lackierung aufweisen, wie das Cabriolet. Denkbar ist aber auch, dass zumindest eines der Dachmodule 5 gemäß der Fig. 2 als transparentes Dachmodul 5 ausgebildet ist.

In Fig. 3 ist die Panaromadachvariante realisiert, bei welcher, wie oben erwähnt, der Überzug 7 bei geschlossenem Verdeck 1 ausschließlich das Verdeckgestänge 6 überzieht, während an den Dachabschnitten 4, 4', 4" und am Heckscheibenrahmen 2 transparente Dachmodule 5 angeordnet sind. Bei dieser Panaromadachvariante ist dabei ein im Vergleich zu einer Heckscheibe 8 größeres, transparentes Dachmodul 5 am Heckschreibenrahmen 2 angeordnet, wodurch sich das große, bereits jeweils in den vorderen Dachabschnitten 4, 4', 4" eingesetzte transparente. Dachmodul 5 auch im Heckscheibenrahmen 2 wieder findet und dadurch den optischen Gesamteindruck des Panaromadachs verbessert.

Bei einem über sämtliche Dachabschnitte 4, 4', 4" und den Heckscheibenrahmen 2 gehenden Überzug 7, übernimmt dieser den Wetterschutz, wobei bei dieser Variante und bei dem als Panaromadach ausgebildeten Verdeck zwischen zwei benachbarten Dachabschnitten 4, 4' und/oder zwischen dem Heckscheibenrahmen 2 und dessen benachbarten Dachabschnitt 4" jeweils eine Dichtung 9 angeordnet sein kann, die insbesondere als Akustikdichtung ausgebildet ist und den Innenraum des Cabriolets schalltechnisch abschirmt. Eine derartige Dichtung 9 kann beispielsweise durch ein Mikrofaser-Vlies realisiert werden, welches gemäß einer speziellen Ausführungsform in einen Schlauch eingenäht sein kann. Die Dichtung 9 dichtet somit die zwischen den einzelnen Dachabschnitten 4, 4', 4" bzw. zwischen dem Dachabschnitt 4" und dem Heckscheibenrahmen 2 gelegenen Fugen 10, 10', 10" zumindest schalltechnisch ab.

## Patentansprüche

1. Verdeck (1) für ein Cabriolet, das in einem rückwärtigen Bereich des Cabriolets ablegbar ist und das einen rückwärtigen Heckscheibenrahmen (2) und in geschlossenem Zustand zumindest einen in Fahrtrichtung (3) davor gelegenen Dachabschnitt (4, 4', 4") aufweist, welcher zumindest eine Dachabschnitt (4, 4', 4") und/oder Heckscheibenrahmen (2) jeweils als rahmenartiger Modulträger ausgebildet sind/ist, an dem zur Realisierung unterschiedlicher Dachvarianten unterschiedliche, flächige Dachmodule (5) anbringbar sind, wobei zumindest teilweise ein flexibler Überzug (7) vorgesehen ist, **dadurch gekennzeichnet, dass** zur Realisierung einer Panoramadachvariante der Überzug (7) bei geschlossenem Verdeck (1) ausschließlich das Verdeckgestänge (6) überzieht, während an den Dachabschnitten (4, 4', 4") und im Heckscheibenrahmen (2) transparente Dachmodule (5) angebracht sind.

2. Verdeck nach Anspruch 1, **dadurch gekennzeichnet, dass** das Verdeck (1) insgesamt drei Dachabschnitte (4, 4', 4") und den Heckscheibenrahmen (2) aufweist, wobei der in Fahrtrichtung vorderste Dachabschnitt (4) als Integraldachrahmen und die dahinter gelegenen Dachabschnitte (4', 4") als erster und zweiter Flächenspriegel ausgebildet sind.

3. Verdeck nach Anspruch 1 oder 2, **dadurch gekennzeichnet,**
- **dass** zumindest ein Dachmodul (5) zumindest teilweise transparent ist, und/oder
- **dass** zumindest ein Dachmodul (5) aus klarem oder getöntem Sicherheitsverbundglas ausgebildet ist, und/der
- **dass** zumindest ein Dachmodul (5) aus Leichtmetall oder aus Kunststoff ausgebildet ist, und/oder
- **dass** zumindest ein Dachmodul (5) in der Wagenfarbe gehalten ist.

4. Verdeck nach Anspruch 1, **dadurch gekennzeichnet, dass** für eine weitere Dachvariante der Überzug (7) bei geschlossenem Verdeck (1) sämtliche Dachabschnitte (4, 4', 4") und den Heckscheibenrahmen (2) in einem die Heckscheibe (8) umgebenden Bereich überzieht.

5. Verdeck nach Anspruch 1, **dadurch gekennzeichnet, dass** bei der Panoramadachvariante ein im Vergleich zu einer Heckscheibe (8) größeres, transparentes Dachmodul (5) am Heckscheibenrahmen (2) angebracht ist.

6. Verdeck nach Anspruch 1, **dadurch gekennzeichnet, dass** für eine weitere Dachvariante der Überzug (7) bei geschlossenem Verdeck (1) das Verdeckgestänge (6) und den Heckscheibenrahmen (2) in einem die Heckscheibe (8) umgebenden Bereich überzieht, während an den Dachabschnitten (4, 4', 4") ausschließlich nicht transparente Dachmodule (5) angebracht sind.

7. Verdeck nach einem der Ansprüche 1 bis 6, **dadurch gekennzeichnet,**
- **dass** zwischen zwei benachbarten Dachabschnitten (4, 4', 4") und/oder zwischen dem Heckscheibenrahmen (2) und dessen benachbartem Dachabschnitt (4") jeweils eine Dichtung (9) angeordnet ist, und/oder
- **dass** die Dichtung (9) als Akustikdichtung ausgebildet ist.

8. Verdeck nach einem der Ansprüche 1 oder 4 bis 7, **dadurch gekennzeichnet, dass** das Verdeckgestänge (6) bei geschlossenem Verdeck (1) seitliche Dachrahmen bildet, zwischen welchen der wenigstens eine Dachabschnitt (4, 4', 4") und der Heckscheibenrahmen (2) angeordnet sind.

## Claims

1. Top (1) for a convertible, which can be put away in a rear region of the convertible and which has a rear window frame (2) and, in the closed state, at least one roof section (4, 4', 4") situated in front thereof in the direction of travel (3), which at least one roof section (4, 4', 4") and/or rear window frame (2) is/are each designed as frame-like module carriers to which different sheet-like roof modules (5) can be fitted in order to realize different roof variants, wherein a flexible covering (7) is at least partially provided, **characterized in that**, in order to realize a panorama roof variant, when the top (1) is closed the covering (7) only covers the top linkage (6) while transparent roof modules (5) are fitted to the roof sections (4, 4', 4") and in the rear window frame (2).

2. Top according to Claim 1, **characterized in that** the top (1) has a total of three roof sections (4, 4', 4") and the rear window frame (2), the frontmost roof section (4) in the direction of travel being designed as an integral roof frame and the roof sections (4', 4") situated behind it being designed as first and second surface bows.

3. Top according to Claim 1 or 2, **characterized**
- **in that** at least one roof module (5) is at least partially transparent, and/or
- **in that** at least one roof module (5) is formed from clear or tinted laminated safety glass, and/or
- **in that** at least one roof module (5) is formed from light metal or from plastic, and/or
- **in that** at least one roof module (5) is kept in the colour of the vehicle.

4. Top according to Claim 1, **characterized in that**, for a further roof variant, when the top (1) is closed, the covering (7) covers all of the roof sections (4, 4', 4") and the rear window frame (2) in a region surrounding the rear window (8).

5. Top according to Claim 1, **characterized in that**, in the case of the panorama roof variant, a transparent roof module (5) which is larger than a rear window (8) is fitted to the rear window frame (2).

6. Top according to Claim 1, **characterized in that**, for a further roof variant, when the top (1) is closed, the covering (7) covers the top linkage (6) and the rear window frame (2) in a region surrounding the rear window (8) while only non-transparent roof modules (5) are fitted to the roof sections (4, 4', 4").

7. Top according to one of Claims 1 to 6, **characterized**
- **in that** a respective seal (9) is arranged between two adjacent roof sections (4, 4', 4") and/or between the rear window frame (2) and its adjacent roof section (4"), and/or
- **in that** the seal (9) is designed as an acoustic seal.

8. Top according to one of Claims 1 or 4 to 7, **characterized in that**, when the top (1) is closed, the top linkage (6) forms lateral roof frames between which the at least one roof section (4, 4', 4") and the rear window frame (2) are arranged.

## Revendications

1. Capote (1) pour un cabriolet, qui peut être déposée dans une région arrière du cabriolet et qui présente un cadre arrière de vitre arrière (2) et dans l'état fermé, au moins une portion de toit (4, 4', 4") placée avant celui-ci dans la direction de conduite (3), ladite au moins une portion de toit (4, 4', 4") et/ou cadre de vitre arrière (2) étant réalisés à chaque fois sous forme de support modulaire de type cadre, sur lequel peuvent être montés des modules de toit plats (5) différents, pour la réalisation de différentes variantes de toit, un revêtement flexible (7) étant au moins partiellement prévu, **caractérisée en ce que**, pour la réalisation d'une variante de toit panoramique, le revêtement (7) recouvre exclusivement la tringlerie de capote (6) lorsque la capote (1) est fermée, tandis que des modules de toit transparents (5) sont montés sur les portions de toit (4, 4', 4") et dans le cadre de vitre arrière (2).

2. Capote selon la revendication 1, **caractérisée en ce que** la capote (1) présente dans l'ensemble trois portions de toit (4, 4', 4") et le cadre de vitre arrière (2), la portion de toit (4) la plus en avant dans la direction de conduite étant réalisée sous forme de cadre de toit intégral et les portions de toit placées derrière (4', 4") étant réalisées sous forme de premier et deuxième arceaux de surface.

3. Capote selon la revendication 1 ou 2, **caractérisée en ce que**
- au moins un module de toit (5) est au moins partiellement transparent, et/ou
- au moins un module de toit (5) est réalisé en verre feuilleté de sécurité clair ou teinté et/ou
- au moins un module de toit (5) est réalisé en métal léger ou en plastique, et/ou
- au moins un module de toit (5) est de couleur identique au véhicule.

4. Capote selon la revendication 1, **caractérisée en ce que** pour une autre variante de toit, le revêtement (7) recouvre toutes les portions de toit (4, 4', 4") et le cadre de vitre arrière (2) dans une région entourant la vitre arrière (8) lorsque la capote (1) est fermée.

5. Capote selon la revendication 1, **caractérisée en ce que** dans la variante de toit panoramique, un module de toit (5) transparent plus grand par comparaison à une vitre arrière (8), est monté sur le cadre de vitre arrière (2).

6. Capote selon la revendication 1, **caractérisée en ce que** pour une autre variante de toit, le revêtement (7) recouvre la tringlerie de capote (6) et le cadre de vitre arrière (2) dans une région entourant la vitre arrière (8) lorsque la capote (1) est fermée, tandis que des modules de toit (5) exclusivement non transparents sont montés sur les portions de toit (4, 4', 4").

7. Capote selon l'une quelconque des revendications 1 à 6, **caractérisée en ce**
- **qu'**entre deux portions de toit adjacentes (4, 4', 4") et/ou entre le cadre de vitre arrière (2) et sa portion de toit adjacente (4"), est à chaque fois disposé un joint d'étanchéité (9) et/ou
- en ce que le joint d'étanchéité (9) est réalisé sous forme de joint acoustique.

8. Capote selon l'une quelconque des revendications 1 ou 4 à 7, **caractérisée en ce que** la tringlerie de capote (6) forme des cadres de toit latéraux lorsque la capote (1) est fermée, entre lesquels sont disposés l'au moins une portion de toit (4, 4', 4") et le cadre de vitre arrière (2).
